# FASCICULE DE BREVET EUROPEEN

(11) **EP 0 910 905 B1**
(45) Date de publication et mention de la délivrance du brevet: **17.05.2000**
(21) Numéro de dépôt: 97929364.4
(22) Date de dépôt: 17.06.1997
(51) Int. Cl.: H04B 5/00, H04B 5/02

(54) **DISPOSITIF POUR L'EMISSION ET LA RECEPTION DE DONNEES NUMERIQUES PAR INDUCTION ELECTROMAGNETIQUE ET COUPLAGE INDUCTIF**
VORRICHTUNG ZUM SENDEN UND EMPFANGEN VON DIGITALEN DATEN DURCH ELEKTROMAGNETISCHE INDUKTION UND INDUKTIVE ANKOPPLUNG
DEVICE FOR TRANSMITTING AND RECEIVING DIGITAL DATA BY ELECTROMAGNETIC INDUCTION AND INDUCTIVE COUPLING

(30) Priorité: 12.07.1996 FR 9609035
(43) Date de publication de la demande: 28.04.1999
(73) Titulaire: Inside technologies, 69930 Saint-Clément-les-Places (FR)
(72) Inventeur: MARTIN, Michel, F-13840 Rognes (FR); SERRA, Didier, F-13240 Septèmes les Vallons (FR)
(74) Mandataire: Marchand, André
(86) Numéro de dépôt international: FR9701087
(87) Numéro de publication internationale: WO9802980

(56) Documents cités:
- EP-A- 0 320 015
- US-A- 4 558 271

## Description

La présente invention concerne la transmission de données par induction électromagnétique et couplage inductif, au moyen d'une première bobine excitée par une tension alternative modulée en amplitude et d'une deuxième bobine recopiant par induction la tension d'excitation de la première bobine. Cette technique de transmission de données est utilisable quand la distance entre les bobines est réduite, et convient particulièrement bien aux cartes à puce sans contact et aux étiquettes électroniques

Plus particulièrement, la présente invention concerne un dispositif pour l'émission et la réception de données numériques par induction électromagnétique et couplage inductif, comprenant une bobine, un circuit limiteur d'une tension induite dans la bobine se déclenchant lorsque la tension induite est supérieure à un seuil, des moyens démodulateurs pour la réception de données et, pour l'émission de données, des moyens pour faire fluctuer la charge de la bobine.

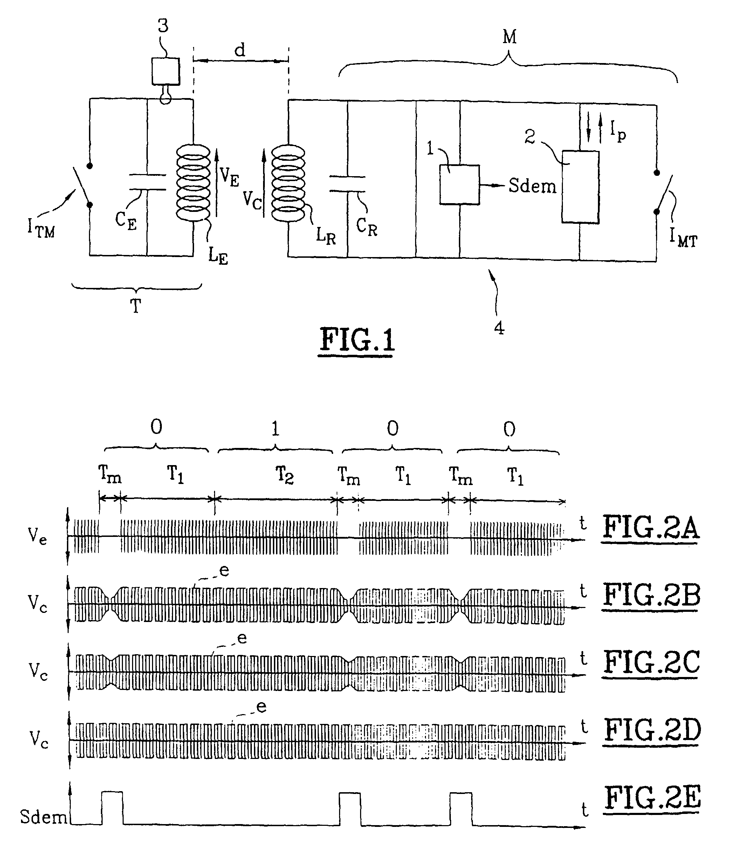

La figure 1 représente le schéma électrique classique d'un système de transmission de données par induction et couplage inductif. Un terminal T, par exemple un lecteur de cartes à puce sans contact, est équipé d'une bobine d'émission L_{E} formant avec une capacité C_{E} un circuit résonnant excité par une tension Ve oscillant à une fréquence porteuse Fp. A proximité du terminal T se trouve un module électronique M, par exemple le circuit intégré d'une carte à puce sans contact. Le module M est équipé d'un circuit d'émission-réception 4 comprenant une bobine L_{R}, une capacité C_{R}, un démodulateur 1, un circuit limiteur de tension 2 et un interrupteur I_{MT}. La bobine L_{R} forme avec la capacité C_{R} un circuit résonnant L_{R}C_{R} accordé au circuit émetteur L_{E}C_{E}. Une tension induite Vc oscillant à la fréquence porteuse Fp apparaît aux bornes de la bobine L_{R}.

Pour la transmission de données dans le sens du terminal T vers le module M, le circuit résonnant L_{E}C_{E} du terminal T est court-circuité alternativement par un interrupteur électronique I_{TM}. La figure 2A représente l'aspect de la tension Ve, dont les alternances sont représentées schématiquement par des traits verticaux. On y voit s'alterner des périodes où la tension Ve est maximale et des périodes de modulation de durée Tm, où la tension Ve est nulle. La tension induite Vc reçue par le module M, représentée à titre d'exemple sur la figure 2B, est l'image de la tension d'excitation Ve et son enveloppe *e* présente des maxima d'amplitude alternant avec des minima correspondant aux creux de modulation de la tension d'excitation. La démodulation de la tension Vc est assurée par le démodulateur 1 qui délivre un signal logique S_{dem} représenté sur la figure 2E. Le signal S_{dem}, par exemple à 1 pendant les creux de modulation et à 0 pendant les périodes de non modulation, est appliqué à un circuit décodeur (non représenté) qui délivre le message reçu sous forme d'une suite de 1 et de 0. Bien entendu, le codage des données numériques peut être réalisé de diverses manières. Par exemple, le "0" logique peut être codé par un creux de modulation de durée Tm suivi d'une période de non modulation de durée T1, et le "1" logique codé par une période de non modulation de durée T2 (dans ce cas, le fragment de message que l'on voit en figure 2A, une fois décodé, signifie "0100").

La transmission de données dans le sens du module M vers le terminal T repose sur une méthode sensiblement différente, qui consiste à faire fluctuer la charge électrique de la bobine L_{R} du module. L'interrupteur I_{TM} du terminal T est laissé ouvert et l'interrupteur I_{MT}, en parallèle avec la bobine L_{R}, est fermé et ouvert alternativement. La variation de la charge de la bobine L_{R} due à la fermeture de l'interrupteur I_{MT} perturbe le champ magnétique créé le terminal et se répercute par effet de couplage inductif sur sa bobine L_{E} en provoquant un appel de courant. Un capteur de courant 3 ou tout autre moyen de mesure de l'impédance de la bobine L_{E} permet au terminal T de détecter les ouvertures et fermetures de l'interrupteur I_{MT}. Par un décodage approprié, le terminal T en déduit les données que lui envoie le module.

Par ailleurs, comme l'amplitude de la tension induite Vc est susceptible de fluctuer dans de fortes proportions (de quelques volts à la centaine de volts) selon le couplage entre les bobines L_{E}, L_{R}, c'est-à-dire selon la distance *d* séparant les bobines, le circuit limiteur 2 a pour fonction de protéger le module M contre les surtensions. Le circuit limiteur 2 se déclenche lorsque la valeur de crête de la tension induite Vc atteint un seuil V_{D} et laisse alors circuler entre les bornes de la bobine L_{R} un courant alternatif Ip appelé courant de délestage ou courant de limitation. Le seuil V_{D} est par exemple choisi de l'ordre de 18V dans le cas d'un circuit intégré CMOS.

La limitation de l'amplitude de la tension induite Vc, bien que nécessaire à la protection de l'étage d'entrée du module, représente un handicap lorsque le couplage entre les bobines L_{E} et L_{R} est élevé. En effet, quand le couplage augmente, l'énergie transmise à la bobine L_{R} croît mais la tension induite Vc ne peut augmenter en raison de l'intervention du circuit limiteur 2. La bobine L_{R} atteint ainsi un état de saturation en tension qui se manifeste par le fait que les creux de modulation de la tension induite Vc s'estompent, comme illustré sur les figures 2C et 2D. Dans le cas de la figure 2C, les écarts entre les maxima et les minima de la tension Vc sont trop faibles pour être détectés par le démodulateur 1. Dans le cas de la figure 2D, le couplage entre L_{E} et L_{R} est encore plus fort (distance *d* très courte) et l'on ne trouve plus aucune trace de modulation d'amplitude sur l'enveloppe e de la tension Vc. Dans les deux cas, le signal logique de démodulation S_{dem} reste à 0 et le module est incapable de recevoir le message qui lui est envoyé.

Dans l'art antérieur, on évite cet inconvénient en choisissant une durée Tm des creux de modulation suffisamment longue pour que la bobine L_{R} puisse désaturer à chaque creux de modulation. Cette solution présente toutefois l'inconvénient de ralentir considérablement la vitesse de transmission des données.

Ainsi, un objectif de la présente invention est de prévoir un dispositif d'émission-réception qui puisse détecter des creux de modulation de courte durée Tm, même quand la bobine est saturée en tension.

Un autre objectif de la présente invention est de prévoir un dispositif d'émission-réception offrant un périmètre de communication étendu, par exemple de l'ordre de 1 cm à 1,5 m autour d'un terminal.

Pour atteindre ces objectifs, la présente invention se base tout d'abord sur le fait qu'en réception, lorsque la bobine est saturée en tension en raison du déclenchement du circuit limiteur, une modulation d'amplitude apparaît simultanément sur le courant de limitation. Il est donc possible de réaliser une démodulation du courant de limitation au lieu de réaliser une démodulation de la tension induite. Cette démodulation du courant de limitation ne présente pas les inconvénients de la démodulation de la tension induite, dans la mesure où le courant de limitation n'est pas lui-même soumis à une limitation.

Par ailleurs, la présente invention se base également sur le fait qu'en émission, lorsque l'on fait varier la charge de la bobine, il est préférable que la tension induite soit d'une grande intensité afin de créer une forte perturbation du champ magnétique environnant, pouvant être facilement perçue par le terminal.

Ainsi, la présente invention propose un procédé pour l'émission et la réception de données au moyen d'une bobine équipée d'un circuit limiteur se déclenchant lorsqu'une tension induite dans la bobine est supérieure à un seuil, comprenant les opérations suivantes : pour la réception de données, abaisser le seuil de déclenchement du circuit limiteur à un premier niveau bas, de manière que la bobine soit saturée en tension, et démoduler un courant de limitation apparaissant dans la bobine ou le circuit limiteur ; pour l'émission de données, remonter le seuil de déclenchement du circuit limiteur à un niveau haut et faire fluctuer la charge de la bobine.

La présente invention prévoit également un dispositif d'émission-réception du type décrit ci-dessus, dans lequel le circuit limiteur comprend des moyens pour régler le seuil de déclenchement à un premier niveau bas pendant la réception de données et à un niveau haut pendant l'émission de données.

Avantageusement, les moyens démodulateurs sont agencés pour démoduler l'amplitude d'un courant de limitation apparaissant lorsque le circuit limiteur est déclenché.

Dans ce cas, on aura bien entendu réglé le premier niveau du seuil de déclenchement du circuit limiteur suffisamment bas pour que le courant de limitation soit toujours présent. Sinon, on procédera à une démodulation mixte courant ou tension selon que le courant de limitation est présent ou non.

Selon un mode de réalisation, les moyens pour régler le seuil de déclenchement du circuit limiteur comprennent une pluralité de diodes en série et un premier interrupteur agencé pour court-circuiter une partie au moins de la pluralité de diodes.

Selon un mode de réalisation, le circuit limiteur comprend en outre des moyens pour régler le seuil de déclenchement à un deuxième niveau bas pendant l'émission de données. Dans ce cas, les fluctuations de la charge de la bobine sont réalisées par des transitions entre le niveau haut et le deuxième niveau bas du seuil de déclenchement.

Selon un mode de réalisation, les moyens pour régler le seuil de déclenchement du circuit limiteur comprennent une pluralité de diodes en série, un premier interrupteur pour court-circuiter un certain nombre de diodes et un deuxième interrupteur pour court-circuiter un certain autre nombre de diodes.

Avantageusement, les moyens démodulateurs reçoivent comme signal à démoduler une tension de commande d'un transistor contrôlant le courant de limitation. On évite ainsi l'ajout d'un capteur de courant.

Ces caractéristiques et avantages ainsi que d'autres de la présente invention seront exposés plus en détails dans la description suivante d'un exemple de réalisation d'un démodulateur selon l'invention, en relation avec les figures jointes parmi lesquelles :
- la figure 1 précédemment décrite représente de façon simplifiée le schéma électrique classique d'un système de communication de données par induction électromagnétique et couplage inductif,
- les figures 2A à 2E précédemment décrites représentent divers signaux électriques apparaissant dans le système de la figure 1,
- la figure 3 représente le schéma électrique d'un dispositif d'émission-réception selon l'invention,
- la figure 4 représente une variante de réalisation du dispositif de la figure 3,
- la figure 5 représente une variante de réalisation du dispositif de la figure 4,
- les figures 6A à 6D représentent divers signaux électriques apparaissant dans le dispositif de la figure 4 pendant la réception de données, et
- les figures 7A et 7B représentent des signaux électriques apparaissant dans le dispositif de la figure 4 pendant l'émission de données.

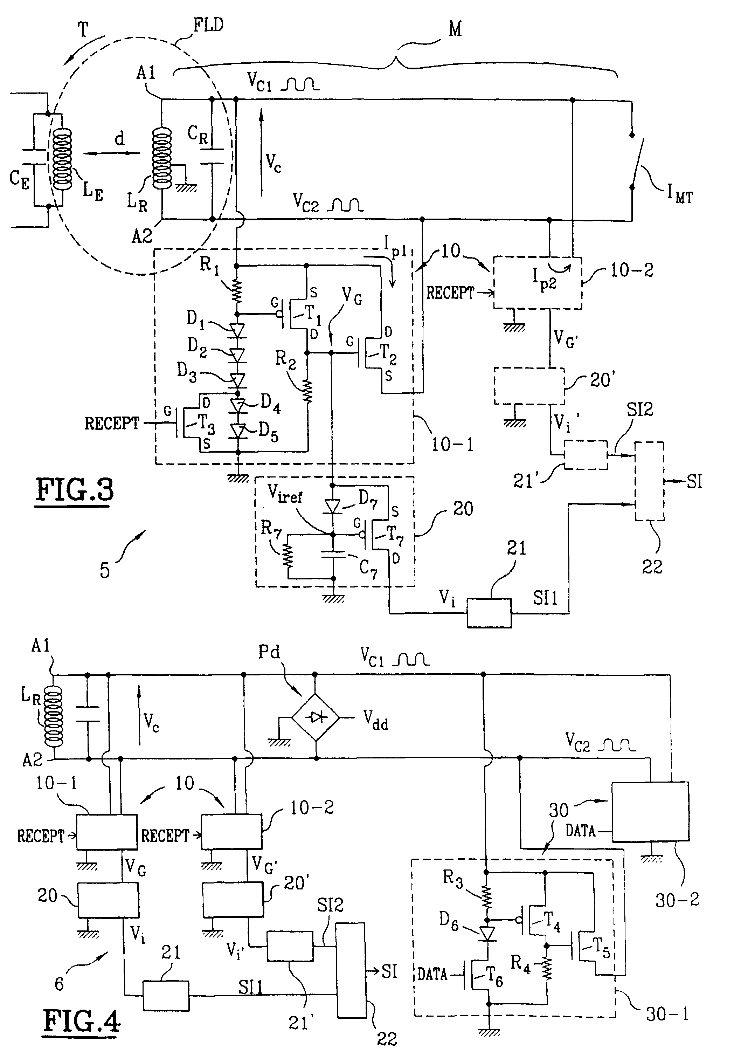

La figure 3 représente un dispositif d'émission-réception 5 selon l'invention. Le dispositif 5 est par exemple intégré dans un module électronique M destiné à dialoguer avec un terminal T. Le terminal T émet un champ magnétique FLD au moyen d'une circuit résonant L_{E}C_{E}, l'intensité du champ magnétique étant modulée lorsque des données sont envoyées au module.

Le dispositif 5 selon l'invention comprend une bobine L_{R}, formant avec une capacité C_{R} un circuit accordé L_{R}C_{R}, un circuit limiteur 10 selon l'invention, un interrupteur I_{MT} en parallèle avec la bobine L_{R}, pour l'émission de données par modification de la charge de la bobine L_{R}, et un démodulateur 20 selon l'invention, pour la réception de données.

Le circuit limiteur 10 présente ici une structure symétrique et comprend un demi-circuit 10-1 pour limiter des alternances positives Vc1 de la tension Vc induite dans la bobine L_{R} et un demi-circuit 10-2 pour limiter les alternances négatives Vc2 de la tension Vc. Le demi-circuit 10-1 comprend, entre une borne A1 de la bobine L_{R} et la masse, une résistance R1 en série avec un groupe de diodes agencées dans le sens passant, ici cinq diodes D1 à D5 respectivement, la cathode de la dernière diode D5 étant connectée à la masse. Le point milieu entre la résistance R1 et la première diode D1 est connecté à la grille G d'un transistor PMOS T1 dont la source S est connectée à la borne A1. Le drain D du transistor Tl est connecté à la masse par l'intermédiaire d'une résistance R2 et attaque la grille G d'un transistor NMOS T2. Le drain D du transistor T2 est connecté à la borne A1 et sa source S à l'autre borne A2 de la bobine. Le demi-circuit 10-2, de même structure que le demi-circuit 10-1 et représenté dans un souci de simplicité sous la forme d'un bloc, est connecté dans le sens de la borne A2 vers la borne A1.

Lorsqu'une alternance positive Vc1 de la tension induite Vc atteint la tension de conduction du groupe de diodes D1 à D5, le transistor T1 est passant et un courant circule dans la résistance R2. Une tension VG apparaît sur la grille G du transistor T2 qui devient progressivement conducteur. Le transistor T2 laisse traverser l'alternance positive Ip1 d'un courant Ip de limitation de la tension Vc puis se referme. De la même manière, l'alternance négative Ip2 du courant de limitation Ip traverse le demi-circuit 10-2 au cours d'une alternance négative Vc2 de la tension induite Vc.

Selon l'invention, la tension de conduction du groupe de diodes D1 à D5, qui représente le seuil V_{D} de déclenchement du circuit limiteur 10, peut être réglée au moyen d'un transistor shunt T3 disposé en parallèle avec les deux dernières diodes D4, D5 et commandé par un signal RECEPT. Quand le signal RECEPT est à 1 et que le transistor shunt T3 est passant, le seuil V_{D} est égal à la somme V_{Da} des tensions de seuil des diodes D1, D2 et D3 et est minimal, les diodes D4 et D5 étant court-circuitées. Quand le signal RECEPT est à 0, le seuil V_{D} est égal à la somme V_{Db} des tensions de seuil des cinq diodes D1 à D5 et est maximal.

Selon l'invention, le démodulateur 20 assure la démodulation du courant de limitation Ip, utilisé comme signal à démoduler au lieu de la tension induite Vc. On notera que l'effet de modulation du courant de limitation Ip existe tant que le circuit limiteur 10 n'écrête pas le courant de limitation. En pratique, on choisira donc le transistor T1 du circuit limiteur 10 d'une dimension suffisante pour absorber sans saturation le courant de limitation Ip (dans les limites des conditions normales de fonctionnement).

Le démodulateur 20 reçoit ici comme signal à démoduler la tension VG présente sur la grille G du transistor T2 contrôlant l'alternance positive Ip1 du courant de limitation Ip. L'utilisation de la tension VG en tant que signal à démoduler permet d'éviter l'ajout d'un capteur de courant, la tension VG étant représentative du courant Ip1 selon une relation linéaire, au carré ou exponentielle suivant le régime de fonctionnement du transistor T2. Le démodulateur 20 comprend en entrée une diode D7 recevant sur son anode la tension VG. La cathode de la diode D7 est connectée à la masse par l'intermédiaire d'un circuit de type RC comprenant une capacité C7 en parallèle avec une résistance R7, ainsi qu'à la grille G d'un transistor PMOS T7 dont la source S reçoit la tension à démoduler VG. Sur la grille G du transistor T7, on trouve une tension de référence Viref imposée par la capacité C7 et représentative de la valeur moyenne du courant Ip1, la constante de temps du circuit R7C7 étant choisie de manière que la tension Viref reste constante pendant les creux de modulation du courant Ip mais suive les variations lentes du courant Ip. Ainsi, à chaque alternance positive Ip1, lorsque la tension VG devient supérieure à Viref, la diode D7 est rendue passante, le transistor T7 devient passant et une impulsion de tension apparaît sur son drain D, le transistor T7 fonctionnant comme un comparateur. Le drain D du transistor T7 forme la sortie du démodulateur 20 et qui délivre un signal pulsé Vi. Le signal pulsé Vi est envoyé dans un circuit de mise en forme 21 de type classique délivrant un signal logique SI1 semblable au signal Sdem illustré sur la figure 2E.

Comme représenté sur la figure 3, le démodulateur 20 peut, de façon optionnelle, être combiné avec un démodulateur 20' fonctionnant sur les alternances négatives Ip2 du courant Ip, afin de détecter les creux de modulation avec une précision d'une demi-période de la fréquence d'oscillation Fc du champ magnétique FLD. Le démodulateur 20' est identique au démodulateur 20 et est représenté sous forme d'un bloc en traits pointillés. Le démodulateur 20' reçoit en entrée une tension VG' semblable à la tension VG, prélevée dans le demi-circuit limiteur 10-2, et délivre un signal pulsé Vi' transformé en un signal logique SI2 par un circuit de mise en forme 21'. Les signaux SI1 et SI2 sont additionnés dans un circuit logique 22 dont la sortie délivre un signal combiné SI qui passe à 1 dès l'instant où le premier des deux signaux SI1 ou SI2 passe à 1, et à 0 dès l'instant ou le premier des deux signaux SI1 ou SI2 passe à 0.

Selon l'invention, le signal RECEPT de commande du transistor shunt T3 est mis à 1 lorsque le dispositif 5 reçoit des données envoyées par le terminal T. Le seuil de déclenchement du circuit limiteur 10 est alors à la valeur basse V_{Da} qui peut par exemple être choisie de l'ordre de 4 V (soit 8 V crête à crête pour la tension induite Vc). L'avantage est que l'on maintient ainsi le circuit limiteur 10 déclenché et l'on fait apparaître le courant de limitation Ip même quand l'intensité du champ magnétique FLD et la tension induite Vc sont faibles (distance *d* séparant le module M du terminal T élevée). La sensibilité du dispositif 5 selon l'invention en mode réception de données est donc maximale, et permet la réception de données dans un large périmètre.

D'autre part, le signal RECEPT est mis à 0 quand le dispositif 5 envoie des données au terminal. Le seuil de déclenchement V_{D} du circuit limiteur est alors porté à sa valeur maximale V_{Db}, qui peut être choisie égale à la tension maximale autorisée par la technologie de fabrication du module, par exemple 9 V (soit 18 V crête à crête) avec la technologie CMOS. L'avantage est que la commutation de la bobine L_{R} par l'interrupteur I_{MT} est faite avec une tension induite Vc maximale, ce qui permet de perturber fortement le champ magnétique FLD. En définitive, tant pour l'émission que la réception, le dispositif 5 selon l'invention offre un périmètre de communication étendu et une vitesse de transmission des données élevées, la durée Tm des creux de modulation pouvant être courte.

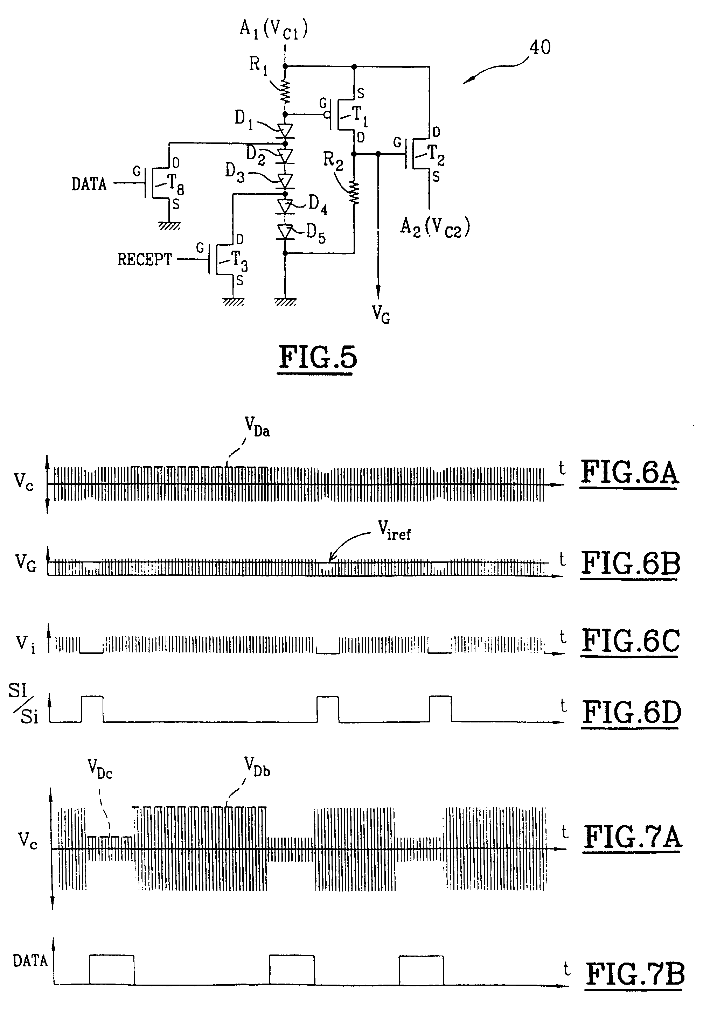

Pour fixer les idées, les figures 6A à 6D illustrent le fonctionnement du dispositif 5 en mode réception de données. La figure 6A représente la courbe de la tension induite Vc, la figure 6B la tension VG de commande du transistor T2 (représentative de l'intensité du courant de limitation Ip), la figure 6C le signal pulsé Vi à la sortie du démodulateur 20, et la figure 6D le signal de démodulation SI (ou le signal SI1 l'on choisit une démodulation simple alternance). La bobine étant maintenue saturée par le limiteur 10, dont le seuil de déclenchement est à sa valeur minimale V_{Da}, on voit que les creux de modulation de la tension induite Vc sont peu marqués (figure 6A) et ne pourraient être détectés par un démodulateur recevant en entrée la tension induite Vc. Par contre, la tension VG représentative du courant de limitation Ip oscille et présente une modulation d'amplitude (figure 6B) détectée par le démodulateur 30 qui délivre le signal pulsé Vi1 (figure 6C). Le signal Vi1 cesse de pulser pendant les creux de modulation de la tension VG, lorsque la valeur de crête de la tension VG ne parvient pas à dépasser la tension de seuil Viref. Par convention, le signal logique SI passe à 1 à chaque creux de modulation de la tension VG et à 0 pendant les périodes de non modulation (figure 6D).

La figure 4 représente une variante 6 du circuit émetteur-récepteur selon l'invention, prévue pour un module M alimenté électriquement par un pont redresseur à diodes Pd recevant en entrée la tension induite Vc et délivrant une tension d'alimentation Vdd. Dans ce cas particulier de réalisation, on ne souhaite pas court-circuiter la bobine L_{R} au moyen d'un interrupteur afin de ne pas priver le module de la tension d'alimentation Vdd issue du pont redresseur. L'interrupteur I_{MT} de la figure 3 est ainsi remplacé par un circuit limiteur 30 à seuil variable commandé par un signal DATA, les autres éléments étant conservés. Le circuit limiteur 30 comprend un demi-circuit limiteur 30-1 pour les alternances positives Vc1 de la tension induite Vc et un demi-circuit limiteur 30-2 pour les alternances négatives Vc2. Le demi-circuit 30-1 comprend une résistance R3 connectée à la borne A1 de la bobine L_{R}, un transistor PMOS T4, une résistance R4 et un transistor MOS T5 agencés comme les éléments R1, T1, R2 et T4 du demi-circuit limiteur 10-1 déjà décrit. A la place des diodes D1 à D5, on trouve une diode D6 dont la cathode est connectée à la masse par l'intermédiaire d'un transistor T6 piloté par le signal DATA. Le signal DATA pilote également le demi-circuit 30-2, de même structure que le demi-circuit 30-1 et représenté sous forme de bloc.

Lorsque le signal DATA est à 0, le transistor T6 est bloqué et le limiteur 30 est inactif, la diode D6 étant isolée de la masse. Par analogie, cela correspond sur la figure 3 au cas où l'interrupteur I_{MT} est ouvert. Quand le signal DATA est à 1, le transistor T6 est passant et le circuit limiteur 30 se déclenche quand la tension induite Vc au cours d'une alternance, atteint une limite V_{Dc} égale à la tension de seuil de la diode D6 (en négligeant la tension aux bornes de l'interrupteur T6). Par analogie, cela correspond sur la figure 3 au cas où l'interrupteur I_{MT} est fermé. Toutefois, ici, la tension induite Vc est simplement maintenue en dessous du seuil V_{Dc} au lieu d'être annulée, de sorte que le pont de diodes continue d'être alimenté. De préférence, le seuil V_{Dc} est inférieur au seuil V_{Da} et peut par exemple être choisi égal à 2 V (ou 4 V crête à crête).

Pour fixer les idées, le tableau ci-après résume le fonctionnement du dispositif 6 selon l'invention, en relation avec les figures 7A et 7B qui représentent respectivement l'aspect de la tension induite Vc en fonction du signal DATA et le signal DATA.

La figure 5 représente un circuit limiteur 40 selon l'invention qui est une synthèse des circuits limiteurs 10-1 et 30-1 déjà décrits. Le circuit 40 est identique au circuit 10-1 déjà décrit mais un deuxième transistor shunt T8 commandé par le signal DATA est ajouté en parallèle avec les diodes D2 à D5. Ainsi, le circuit 40 présente un triple seuil de déclenchement V_{D}, égal à V_{Da} quand le signal DATA est à 0 et le signal RECEPT à 1 (réception de données), à V_{Db} quand le signal DATA et le signal RECEPT sont à 0, et à V_{Dc} quand le signal DATA est à 1 et le signal RECEPT à 0 (émission de données).

Il apparaîtra clairement à l'homme de l'art que la présente invention est susceptible de nombreuses autres variantes et modes de réalisation. En particulier, on notera que le démodulateur 20 tel qu'il a été décrit fonctionne selon le principe de la détection de crête mais pourrait fonctionner selon d'autres principes connus, par exemple la détection d'enveloppe ou la détection synchrone. Par ailleurs, le démodulateur pourrait recevoir en entrée un autre signal que la tension de commande VG du transistor T2, par exemple un signal délivré par un capteur de courant. D'autre part, le circuit limiteur est susceptible de tout mode de réalisation connu, les diodes déterminant les valeurs des seuils de déclenchement V_{Da}, V_{Db}, V_{Dc} pouvant être remplacées par tout moyen équivalent, par exemple des diodes zéner, des transistors MOS dont la grille est ramenée sur le drain, des sources de tension commandées, etc. Enfin, le circuit limiteur tel qu'il a été décrit présente une structure symétrique vis à via de la masse mais pourrait, dans une variante de réalisation, être connecté entre les deux bornes de la bobine L_{R}.

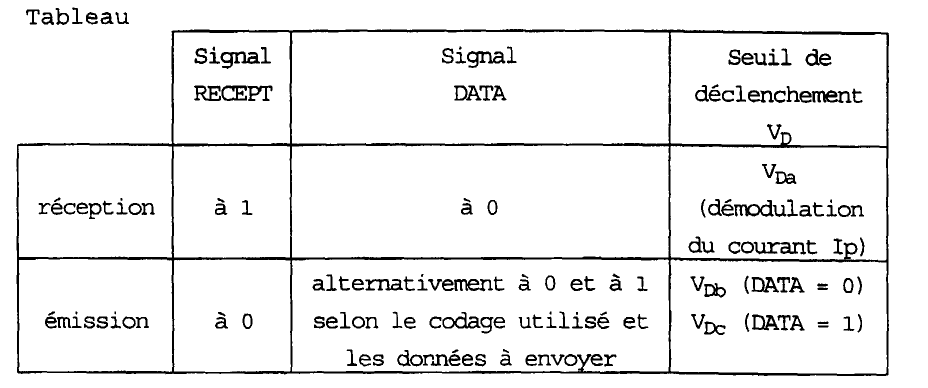

## Revendications

1. Dispositif (5,6) pour l'émission et la réception de données numériques par induction électromagnétique, comprenant :
- une bobine (L_{R}),
- un circuit (10, 40) limiteur d'une tension induite (Vc) dans la bobine (L_{R}), se déclenchant lorsque la tension induite est supérieure à un seuil (V_{D}),
- pour la réception de données, des moyens démodulateurs (20,20'),
- pour l'émission de données, des moyens (I_{MT}, 30, 40) pour faire fluctuer la charge de la bobine (L_{R}),
caractérisé en ce que le circuit limiteur (10, 40) comprend des moyens (D1-D5, T3) pour régler le seuil (V_{D}) de déclenchement à un premier niveau bas (V_{Da}) pendant la réception de données et à un niveau haut (V_{Db}) pendant l'émission de données.

2. Dispositif selon la revendication 1, dans lequel lesdits moyens démodulateurs (20, 20') sont agencés pour démoduler l'amplitude d'un courant de limitation (Ip) apparaissant lorsque le circuit limiteur (10, 40) est déclenché.

3. Dispositif selon l'une des revendications précédentes, dans lequel les moyens pour régler le seuil de déclenchement (V_{D}) du circuit limiteur comprennent une pluralité de diodes (D1-D5) en série et un premier interrupteur (T3) agencé pour court-circuiter une partie au moins (D3-D5) de ladite pluralité de diodes.

4. Dispositif selon l'une des revendications précédentes, dans lequel le circuit limiteur (10, 40) comprend en outre des moyens (T8) pour régler le seuil de déclenchement à un deuxième niveau bas (V_{Dc}) pendant l'émission de données.

5. Dispositif selon la revendication 4, dans lequel les moyens pour régler le seuil de déclenchement (V_{D}) du circuit limiteur comprennent une pluralité de diodes (D1-D5) en série, un premier interrupteur (T3) pour court-circuiter un certain nombre (D4, D5) de diodes et un deuxième interrupteur (T8) pour court-circuiter un certain autre nombre (D2-D5) de diodes.

6. Dispositif selon l'une des revendications précédentes, dans lequel les moyens démodulateurs (20, 20') reçoivent comme signal à démoduler une tension de commande (VG) d'un transistor (T2) contrôlant le courant de limitation (Ip).

7. Dispositif selon l'une des revendications précédentes, dans lequel les moyens démodulateurs (20, 20') comprennent un premier démodulateur (20) des alternances positives (Ip1) du courant de limitation (Ip) et un second démodulateur (20') des alternances négatives (Ip2) du courant de limitation (Ip).

8. Procédé pour l'émission et la réception de données au moyen d'une bobine (L_{R}) équipée d'un circuit limiteur (10, 40) se déclenchant lorsqu'une tension (Vc) induite dans la bobine est supérieure à un seuil (V_{D}), caractérisé en ce qu'il comprend les opérations consistant à :
- pour la réception de données, abaisser le seuil (V_{D}) de déclenchement du circuit limiteur (10, 40) à un premier niveau bas (V_{Da}) choisi de manière que la bobine soit saturée en tension, et démoduler un courant de limitation (Ip) apparaissant dans la bobine (L_{R}) ou le circuit limiteur (10, 40),
- pour l'émission de données, remonter le seuil de déclenchement (V_{D}) du circuit limiteur (10, 40) à un niveau haut (V_{Db}) et faire fluctuer la charge de la bobine (L_{R}).

9. Procédé selon la revendication 8, dans lequel, pour faire fluctuer la charge de la bobine (L_{R}), on fait fluctuer le seuil (V_{D}) de déclenchement du circuit limiteur (40) entre le niveau haut (V_{Db}) et un deuxième niveau bas (V_{Dc}).

10. Procédé selon la revendication 9, dans lequel le deuxième niveau bas (V_{Dc}) est inférieur au premier niveau bas (V_{Db}).

## Patentansprüche

1. Vorrichtung (5, 6) zum Senden und Empfangen von digitalen Daten durch elektromagnetische Induktion, umfassend:
- eine Spule (L_{R}),
- eine Schaltung (10, 40) zur Begrenzung der in der Spule (L_{R}) induzierten Spannung (Vc), welche ausgelöst wird, wenn die induzierte Spannung über einer Schwelle (V_{D}) liegt,
- Demodulationsmittel (20, 20') für den Empfang der Daten,
- Mittel (I_{MT}, 30, 40) um die Ladung der Spule (L_{R}) fluktuieren zu lassen, zum Senden der Daten,
dadurch gekennzeichnet, dass die Begrenzungsschaltung (10, 40) Mittel (D1-D5, T3) umfasst, zur Regelung der Auslöseschwelle (V_{D}) auf ein erstes tiefes Niveau (V_{Da}) während des Datenempfangs und auf ein hohes Niveau (V_{Db}) während der Sendung von Daten.

2. Vorrichtung nach Anspruch 1, bei welcher die Demodulationsmittel (20, 20') eingerichtet sind, um die Amplitude eines Begrenzungsstroms (Ip) zu demodulieren, der auftritt, wenn die Begrenzungsschaltung (10, 40) ausgelöst ist.

3. Vorrichtung nach einem der vorangegangenen Ansprüche, bei welcher die Mittel zur Regelung der Auslöseschwelle (V_{D}) der Begrenzungsschaltung eine Vielzahl von Dioden (D1-D5) in Reihe umfassen, und einen ersten Unterbrecher (T3), der eingerichtet ist, um einen Teil zumindest (D3-D5) der Vielzahl von Dioden kurz zu schließen.

4. Vorrichtung nach einem der vorangegangenen Ansprüche, bei welcher die Begrenzungsschaltung (10, 40) außerdem Mittel (T8) umfasst, um die Auslöseschwelle auf ein zweites niedriges Niveau (V_{Dc}) während der Sendung von Daten zu regeln.

5. Vorrichtung nach Anspruch 4, bei welcher die Mittel zur Regelung der Auslöseschwelle (V_{D}) der Begrenzungsschaltung eine Vielzahl von Dioden (D1-D5) in Serie umfassen, einen ersten Unterbrecher (T3) zum Kurzschließen einer bestimmten Zahl (D4, D5) von Dioden, und einen zweiten Unterbrecher (T8) zum Kurzschließen einer bestimmten anderen Zahl (D2-D5) von Dioden.

6. Vorrichtung nach einem der vorangegangenen Ansprüche, bei welcher die Demodulationsmittel (20, 20') als zu demodulierendes Signal eine Befehlsspannung (VG) eines Transistors (T2) empfangen, der den Begrenzungsstrom (Ip) steuert.

7. Vorrichtung nach einem der vorangegangenen Ansprüche, bei welcher die Demodulationsmittel (20, 20') einen ersten Demodulator (20) der positiven Änderungen (Ip1) des Begrenzungsstroms (Ip) umfassen, und einen zweiten Demodulator (20') der negativen Änderungen (Ip2) des Begrenzungsstroms (Ip).

8. Verfahren zum Senden und zum Empfangen von Daten mittels einer Spule (L_{R}), die mit einer Begrenzungsschaltung (10, 40) ausgerüstet ist, welche auslöst wenn eine in der Spule induzierte Spannung (Vc) größer als eine Schwelle (V_{D}) ist, dadurch gekennzeichnet, dass sie Schritte umfasst, welche darin bestehen:
- um Daten zu empfangen, die Auslöseschwelle (V_{D}) der Begrenzungsschaltung (10, 40) auf ein erstes niedriges Niveau (V_{Da}) zu senken, welches so gewählt ist, dass die Spule spannungsgesättigt ist, und einen Begrenzungsstrom (Ip) zu demodulieren, der in der Spule (L_{R}) oder der Begrenzungsschaltung (10, 40) auftritt,
- für das Senden von Daten, erhöhen der Auslöseschwelle (V_{D}) der Begrenzungsschaltung (10, 40) auf ein hohes Niveau (V_{Db}) und Fluktuierenlassen der Ladung der Spule (L_{R}).

9. Verfahren nach Anspruch 8, bei dem man die Auslöseschwelle (V_{D}) der Begrenzungsschaltung (40) zwischen einem hohen Niveau (V_{Db}) und einem zweiten tiefen Niveau (V_{Dc}) fluktuieren läßt, um die Ladung der Spule (L_{R}) fluktuieren zu lassen.

10. Verfahren nach Anspruch 9, bei dem das zweite tiefe Niveau (V_{Dc}) niedriger ist als das erste tiefe Niveau (V_{Db}).

## Claims

1. A device (5, 6) for emitting and receiving digital data by electromagnetic induction, comprising:
- a coil (L_{R}),
- a circuit (10, 40) for limiting a voltage (Vc) induced in the coil (L_{R}), which is triggered when the induced voltage is higher than a threshold (V_{D}),
- for receiving data, demodulating means (20, 20', and
- for emitting data, means (I_{MT}, 30, 40) for causing the charge of the coil (L_{R}) to fluctuate,
characterised in that the limiting circuit (10, 40) comprises means (D1-D5, T3) for regulating the triggering threshold (V_{D}) to a first low level (V_{Da}) during data reception and a high level (V_{Db}) during data emission.

2. A device according to claim 1 wherein said demodulating means (20, 20') are arranged to demodulate the amplitude of a limitation current (Ip) which appears when the limiting circuit (10, 40) is triggered.

3. A device according to one of the preceding claims wherein the means for regulating the triggering threshold (V_{D}) of the limiting circuit comprise a plurality of diodes (D1-D5) in series and a first switch (T3) arranged to short-circuit a part at least (D3-D5) of said plurality of diodes.

4. A device according to one of the preceding claims wherein the limiting circuit (10, 40) further comprises means (T8) for regulating the triggering threshold to a second low level (V_{Dc}) during data emission.

5. A device according to claim 4 wherein the means for regulating the triggering threshold (V_{D}) of the limiting circuit comprise a plurality of diodes (D1-D5) in series, a first switch (T3) for short-circuiting a certain number (D4, D5) of diodes and a second switch (T8) for short-circuiting another certain number (D2-D5) of diodes.

6. A device according to one of the preceding claims wherein the demodulating means (20, 20') receive as the signal to be demodulated a control voltage (VG) for a transistor (T2) controlling the limitation current (Ip).

7. A device according to one of the preceding claims wherein the demodulating means (20, 20') comprise a first demodulator (20) for the positive alternations (Ip1) of the limitation current (Ip) and a second demodulator (20') for the negative alternations (Ip2) of the limitation current (Ip).

8. A process for emitting and receiving data by means of a coil (L_{R}) provided with a limiting circuit (10, 40) which is triggered when a voltage (Vc) induced in the coil is higher than a threshold (V_{D}), characterised in that it comprises the operations consisting of:
- for receiving data, reducing the triggering threshold (V_{D}) of the limiting circuit (10, 40) to a first low level (V_{Da}) which is so selected that the coil is saturated in respect of voltage, and demodulating a limitation current (Ip) which appears in the coil (L_{R}) or the limiting circuit (10, 40), and
- for emitting data, raising the triggering threshold (V_{D}) of the limiting circuit (10, 40) to a high level (V_{Db}) and causing the charge of the coil (L_{R}) to fluctuate.

9. A process according to claim 8 wherein, to cause the charge of the coil (L_{R}) to fluctuate, the triggering threshold (V_{D}) of the limiting circuit (40) is caused to fluctuate between the high level (V_{Db}) and a second low level (V_{Dc}).

10. A process according to claim 9 wherein the second low level (V_{Dc}) is lower than the first low level (V_{Db}).
